# EUROPÄISCHE PATENTSCHRIFT

(11) **EP 0 830 935 B1**
(45) Veröffentlichungstag und Bekanntmachung des Hinweises auf die Patenterteilung: **21.05.2003**
(21) Anmeldenummer: 97890124.7
(22) Anmeldetag: 07.07.1997
(51) Int. Cl.: B29D 31/512, B29D 31/50

(54) **Verfahren und Vorrichtung zum Anschäumen einer vorgefertigten Sohlenschale an einem aufgeleisteten Schuhschaft, und entsprechende Sohlenschale**
Method and apparatus for moulding by foaming a prefabricated sole onto an upper mounted on a last, and corresponding sole
Procédé et dispositif pour mouler par moussage une semelle préfabriquée sur une tige fixée sur une forme, et semelle correspondante

(30) Priorität: 20.09.1996 AT 166896
(43) Veröffentlichungstag der Anmeldung: 25.03.1998
(73) Patentinhaber: Schützeneder, Thomas, 4284 Tragwein (AT)
(72) Erfinder: Schützeneder, Thomas, 4284 Tragwein (AT)
(74) Vertreter: Hübscher, Helmut, Dipl.-Ing.

(56) Entgegenhaltungen:
- EP-A- 0 018 663
- DE-A- 1 529 890
- DE-A- 1 923 818
- DE-A- 4 200 730
- DE-B- 1 270 793

## Beschreibung

Die Erfindung bezieht sich auf ein Verfahren zum Anschäumen einer vorgefertigten Sohlenschale mit hochgezogener Umrandung an einem aufgeleisteten Schuhschaft mit an die Umrandung der Sohlenschale passender Seitenwandung, nach dem in die Sohlenschale ausschäumendes Material eingebracht und der Schuhschaft bis zu einer bestimmten Tiefe in die Sohlenschale eingetaucht und dann der Randspalt zwischen Umrandung und Seitenwandung verschlossen und das Material ausschäumen gelassen wird, sowie auf eine Vorrichtung zur Durchfühnrng bzw. eine Sohlenschale zum Anwenden dieses Verfahrens.
Ein solches Verfahren zeigt zum Beispiel die DE-A-4 200 730.

Es ist bekannt, vorgefertigte Sohlenschalen an einem Schuhschaft anzuschäumen, um entsprechend widerstandsfähiges Sohlenmaterial an der Sohlenaußenseite und den Gehkomfort erhöhendes Füllmaterial im Kernbereich der Sohle verwenden zu können, wobei durch Einsatz eines ausschäumenden Materials als Füllmaterial gleichzeitig mit dem Schäumen dieses Füllmaterials der Ansatz der Sohle am Schuhschaft erfolgt. Bisher werden dazu mehrteilige Schäumformen benutzt, die den Spaltbereich zwischen der hochgezogenen Sohlenumrandung und der Schaftseitenwandung durch einen querbeweglichen Formenteil verschließen und damit das Anschäumen der Sohlenschale am Schuhschaft ermöglichen (GB 21 39 942 A, EP 0 018 663 A, DE-A-1 529 890. Diese mehrteiligen Formen bringen allerdings einen beträchtlichen Aufwand mit sich, sie führen zu einem freiliegenden Streifenbereich des Füllmaterials zwischen Sohlenschale und Schuhschaft und sie können wegen ihrer starren, anschlagbestimmten Verschlußstellung Unregelmäßigkeiten des Schalen- oder Schaftmaterials nur ungenügend ausgleichen, was oft zu Schaumaustritten mit der Notwendigkeit einer Nachbearbeitung führt.

Gemäß der DE 42 00 730 A1 wird zum Anschäumen einer Sohlenschale ebenfalls eine mehrteilige, aus einem oberen Formteil und einem Backen bestehende Form verwendet. Zum Anschäumen wird die Sohlenschale mit einem Leisten bis zu einer bestimmten Tiefe in den oberen Formteil mit der vorvulkanisierten Sohlenschale und einem ausschäumenden Material eingetaucht und die Form anschließend von der Schuhseite her mit dem Backen verschlossen. Dabei drückt der Backen von oben auf die Umrandung der Sohlenschale und liegt zudem an der Seitenwandung des Schuhes an, wodurch der Schaum wenigstens in den Bereich zwischen Backen und Seitenwandung und Umrandung der Sohlenschale vordringt.

Der Erfindung liegt daher die Aufgabe zugrunde, diese Mängel zu beseitigen und ein Verfahren der eingangs geschilderten Art anzugeben, das auf rationelle Weise ein einwandfreies Anschäumen der Sohlenschale unter gleichzeitigem Ausgleich auftretender Unregelmäßigkeiten im Übergangsbereich zwischen Sohle und Schaft und ohne Gefahr eines Schaumaustrittes erlaubt. Außerdem soll eine geeignete Sohlenschale zur Anwendung und eine zweckmäßige Vorrichtung zur Durchführung dieses Verfahrens geschaffen werden.

Die Erfindung löst diese Aufgabe dadurch daß bei dem gattungsgemäßen Verfahren die Umrandung der Sohlenschale zum Verschließen des Randspaltes im oberen Randbereich über eine der Umrandung zugehörige, schuhschaftseitig ausgerichtete, umlaufende Dichtkante an die Seitenwandung des Schuhschaftes radial einwärts angedrückt und mittels des bis in den Dichtkantenbereich vordringenden Schaummaterials angeklebt wird. Dadurch stoßen Umrandung und Seitenwandung direkt aneinander und das hochwertige Sohlenmaterial der Sohlenschale umhüllt das Füllmaterial vollständig. Die Elastizität von Umrandung und Seitenwandung erlaubt einen ausreichenden Ausgleich auftretender Materialunregelmäßigkeiten im Anschlußbereich und durch eine einfache Druckbelastung der Umrandung wird mittels der Dichtkante eine saubere Abdichtung des Randspaltes gewährleistet, so daß ein Austreten von Schäumungsmaterial nicht zu befürchten ist. Das bis unmittelbar zur Dichtkante aufschäumende Schäumungsmaterial bringt nicht zuletzt auch im Dichtkantenbereich selbst die erforderliche Klebung bzw. Haftung zwischen Sohlenumrandung und Schaftseitenwandung mit sich, wodurch auch nach der Druckentlastung beim Entformen der Sohle die Dichtkante satt an der Seitenwandung des Schuhschaftes anliegt und Luftspalte vermieden sind.

Um dieses Verfahren funktionssicher anwenden zu können, werden erfindungsgemäß Sohlenschalen eingesetzt, deren hochgezogene Umrandung eine schuhschaftseitig ausgerichtete, umlaufende Dichtkante mit einem bodenseitig anschließenden Ringkanal bildet, in den vom Boden hochführende Verbindungskanäle münden. Die Verbindungskanäle sorgen beim Ausschäumen des in die Sohlenschale eingebrachten Schäumungsmaterials für ein sicheres Hochsteigen dieses Materials bis in den Ringkanal, das hier gleichmäßig rundumverteilt wird und im Nahbereich der Dichtkante durch sein Fertigschäumen eine entsprechende Haftung gewährleistet. Die Verbindungskanäle können durch Nuten an der Umrandungsinnenseite oder auch durch einfache Stege an der Innenseite entstehen.

Da es bei der Durchführung der Verfahren lediglich darauf ankommt, die Sohlenumrandung an die Seitenwandung des Schuhschaftes anzudrücken, genügt eine einfache Vorrichtung mit einem Bett zum Einlegen dieser Sohlenschale und einem relativ zum Bett hubverstellbaren Leisten zum Eintauchen des Schuhschaftes in die Sohlenschale, wobei das einteilige Bett in Höhe des oberen Randbereiches der Umrandung einer eingelegten Sohlenschale mit einer umlaufenden, radial einwärts spannbaren Verschlußeinrichtung versehen ist, so daß sich die Umrandung sauber gegen die Seitenwandung des Schuhschaftes andrücken läßt. An sich können verschiedene Verschlußeinrichtungen vorgesehen sein, günstigerweise besteht aber die Verschlußeinrichtung aus einem in einer einwärts offenen Nut der Bettseitenbegrenzung eingelegten, druckbeaufschlagbaren Druckschlauch, da durch eine solche Druckbeaufschlagung des Druckschlauches eine gleichmäßig um den Umfang verteilt einwirkende Druckbelastung mit entsprechender Ausgleichs- und Anpassungsmöglichkeit an die jeweilige Umrandungsform entsteht.

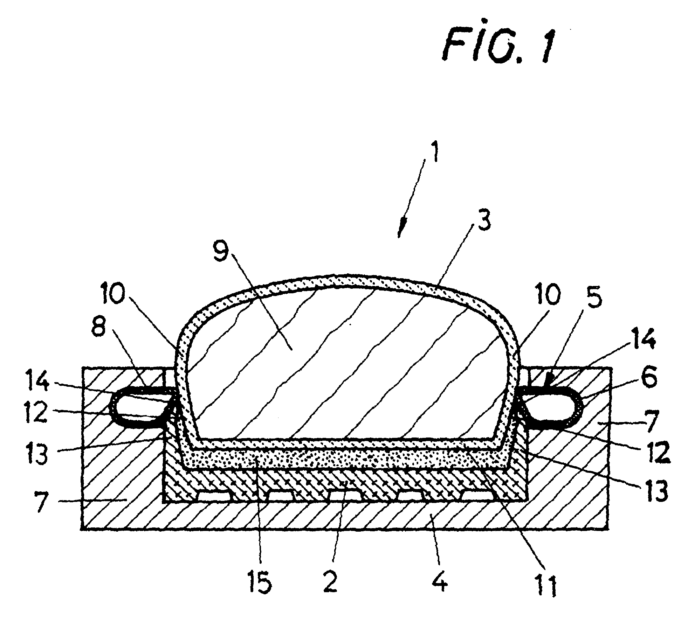

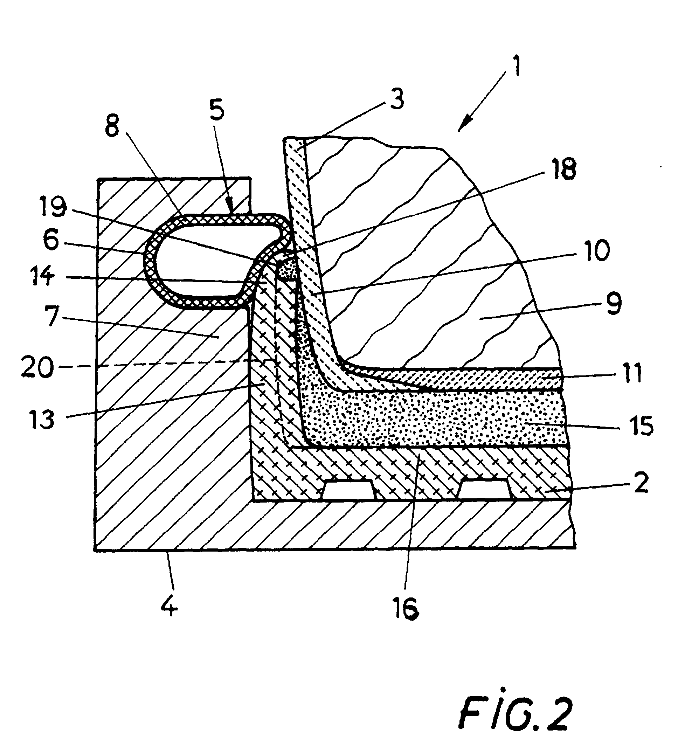

In der Zeichnung ist der Erfindungsgegenstand schematisch veranschaulicht. und zwar zeigen
- Fig. 1 und 2: ein Ausführungsbeispiel einer erfindungsgemäßen Vorrichtung zum Anschäumen einer Sohlenschale an einem Schuhschaft im Querschnitt.

Eine Vorrichtung 1 zum Anschäumen einer vorgefertigten Sohlenschale 2 an einem Schuhschaft 3 besteht im wesentlichen aus einem Bett 4 zum Einlegen der Sohlenschale 2, das im Höhenbereich des Überganges zwischen Sohlenschale und Schuhschaft mit einer Verschlußeinrichtung 5, beispielsweise einem in eine einwärts offene Nut 6 der Bettseitenbegrenzung 7 eingelegten, druckbeaufschlagbaren Druckschlauch 8, ausgestattet ist, sowie aus einem nur angedeuteten, gegenüber dem Bett 4 hubverstellbaren Leisten 9 zum Aufspannen des Schuhschaftes 3, der im Sohlenbereich eine an die Umrandung 13 der Sohlenschale 2 passende Seitenwandung 10 mit einer abschließenden Brandsohle 11 aufweist.

Gemäß dem Ausführungsbeispiel wird nun zum Anschäumen der Sohlenschale 2 am aufgeleisteten Schuhschaft 3 die Sohlenschale 2 in das Bett 4 eingelegt . In die Sohlenschale 2 wird nun ausschäumendes Material eingebracht und der Schuhschaft 3 mittels des Leistens 9 in die Sohlenschale 2 eingetaucht, wobei die Eintauchtiefe die Dicke der fertigen Sohle bestimmt. Nach Erreichen der vorbestimmten Eintauchtiefe erfolgt die Aktivierung der Verschlußvorrichtung 5 durch eine Druckbeaufschlagung des Druckschlauches 8, womit der obere Randbereich 14 der Umrandung 13 an den Bereich 12 des Überlappungsendes der Seitenwandung 10 angedrückt, wobei der Randspalt des Schäumungshohlraumes zwischen Schuhschaft 3 und Sohlenschale 2 damit verschlossen ist und nach dem Ausschäumen das Schaummaterial 15 den Schäumungshohlraum ohne jede Austrittsmöglichkeit vollständig ausfüllt.

Wie aus Fig. 2 ersichtlich, bildet die vorgefertigte Sohlenschale 2 eine vom Sohlenboden 16 hochgezogene Umrandung 13, die mit einer schuhschaftseitig ausgerichteten Dichtkante 18, einem an diese anschließenden Ringkanal 19 und vom Boden 16 hochführenden und in den Ringkanal 19 mündenden Verbindungskanälen 20 versehen ist. Hier wird zum Anschäumen der Sohlenschale 2 am aufgeleisteten Schuhschaft 3 die Sohlenschale 2 in das Bett eingelegt und in die Sohlenschale 2 ausschäumendes Material eingebracht. Der Schuhschaft 3 wird mittels des Leistens 9 in die Sohlenschale 2 eingetaucht, wobei wiederum die Eintauchtiefe die Dicke der fertigen Sohle bestimmt, und die Verschlußeinrichtung 5 aktiviert, so daß der obere Randbereich 14 der Umrandung 13 unter Anlage der Dichtkante 18 an die Seitenwandung 10 des Schuhschaftes 3 angedrückt und der Schäumungsraum abgeschlossen wird. Das Schaummaterial schäumt aus und füllt nicht nur den Zwischenraum zwischen Brandsohle 11 und Sohlenboden 16, sondern gelangt durch die Verbindungskanäle 20 auch in den Ringkanal 19 und verklebt hier gleichmäßig rundum den Endbereich 14 der Umrandung 13 mit der Seitenwandung 10 des Schuhschaftes 3. Es kommt zu einer vollkommenen Umhüllung des Schaummaterials 15 durch die Sohlenschale 2, wobei die Dichtkante 18 der Umrandung 13 für einen spaltfreien Übergang zwischen Sohlenschale bzw. Schalenumrandung und Schuhschaft bzw. Seitenwandung sorgt.

## Patentansprüche

1. Verfahren zum Anschäumen einer vorgefertigten Sohlenschale (2) mit hochgezogener Umrandung an einem aufgeleisteten Schuhschaft (3) mit an die Umrandung (13) der Sohlenschale (2) passender Seitenwandung (10), nach dem in die Sohlenschale (2) ausschäumendes Material eingebracht und der Schuhschaft bis zu einer bestimmten Tiefe in die Sohlenschale eingetaucht und dann der Randspalt zwischen Umrandung (13) und Seitenwandung (10) verschlossen und das Material ausschäumen gelassen wird, **dadurch gekennzeichnet daß** die Umrandung (13) der Sohlenschale (2) zum Verschließen des Randspaltes im oberen Randbereich (14) über eine der Umrandung zugehörige, schuhschaftseitig ausgerichtete, umlaufende Dichtkante (18) an die Seitenwandung (10) des Schuhschaftes (3) radial einwärts angedrückt und mittels des bis in den Dichtkantenbereich vordringenden Schaummaterials angeklebt wird.

2. Sohlenschale (2) zum Anwenden des Verfahrens nach Anspruch 1, mit einem Sohlenboden (16) und einer hochgezogenen Umrandung (13), **dadurch gekennzeichnet, daß** die Umrandung (13) eine schuhschaftseitig ausgerichtete umlaufende Dichtkante (18) mit einem bodenseitig anschließenden Ringkanal (19) bildet, in den vom Boden (16) hochführende Verbindungskanäle (20) münden.

3. Vorrichtung (1) zur Durchführung des Verfahrens nach Anspruch 1, mit einem Bett (4) zum Einlegen der Sohlenschale (2) und einem relativ zum Bett (4) hubverstellbaren Leisten (9) zum Eintauchen des Schuhschaftes (3) in die Sohlenschale (2), **dadurch gekennzeichnet, daß** das einteilige Bett (4) in Höhe des oberen Randbereiches (14) der Umrandung (13) einer eingelegten Sohlenschale (2) mit einer umlaufenden, radial einwärts spannbaren Verschlußeinrichtung (5) versehen ist.

4. Vorrichtung nach Anspruch 3, **dadurch gekennzeichnet, daß** die Verschlußeinrichtung (5) aus einem in einer einwärts offenen Nut (6) der Bettseitenbegrenzung (7) eingelegten druckbeaufschlagbaren Druckschlauch (8) besteht.

## Claims

1. A method of foaming a prefabricated sole shell (2) having a raised border on a shoe upper (3) on a last, the upper having a side wall (10) fitting the border (13) of the sole shell (2), wherein foaming material is introduced into the sole shell (2) and the shoe upper is immersed to a certain depth in the sole shell and then the edge gap between the border (13) and the side wall (10) is closed and the material left to foam, **characterised in that** the border (13) of the sole shell (2) is pressed radially inwards to close the edge gap in the top edge zone (14) over a peripheral sealing edge (18) belonging to the border and aligned adjacent the upper, against the side wall (10) of the shoe upper (3) and is stuck on by means of the foam material advancing into the sealing edge zone.

2. A sole shell (2) for application of the method according to claim 1, with a sole base (16) and a raised border (13), **characterised in that** the border (13) forms a peripheral sealing edge (18) which is aligned adjacent the shoe upper and has an adjoining ring duct (19) at the bottom, connecting ducts (20) leading up from the base (16) into said ring duct (19).

3. Apparatus for performing the method according to claim 1 with a bed (4) for placing the sole shell (2) and a last (9) of adjustable height relatively to the bed (4) for immersing the shoe upper (3) into the sole shell (2), **characterised in that** the one-piece bed (4) is provided, at the level of the top edge zone (14) of the border (13) of an inserted sole shell (2), with a peripheral, radially inwardly clampable closure device (5).

4. Apparatus for performing the method according to claim 3, **characterised in that** the closure device (5) consists of a pressure hose (8) to which pressure can be applied and which is inserted into an upwardly open groove (6) of the bed side boundary (7).

## Revendications

1. Procédé pour produire par moussage une coque de semelle (2) ayant une bordure périphérique relevée, sur une tige de chaussure (3) ayant été montée sur un embauchoir, ayant une paroi latérale (10) s'ajustant à la bordure périphérique (13) de la coque de semelle (2), procédé selon lequel du matériau moussant est introduit dans la coque de semelle (2) et la tige de chaussure est insérée, jusqu'à une profondeur déterminée, dans la coque de semelle et l'intervalle de bordure, entre la bordure périphérique (13) et la paroi latérale (10), étant ensuite fermé et le matériau étant laissé mousser, **caractérisé en ce que** la bordure périphérique (13) de la coque de semelle (2) est pressée radialement vers l'intérieur sur la paroi latérale (10) de la tige de chaussure (3) pour fermer l'intervalle de bordure dans la zone de bordure supérieure (14), sur une arête d'étanchéité (18) de pourtour, orientée vers la tige de chaussure, appartenant à la bordure périphérique, et est rapportée par collage au moyen du matériau de moussage pénétrant jusque dans la zone de l'arête d'étanchéité.

2. Coque de semelle (2) pour application du procédé selon la revendication 1, avec un fond de semelle (16) et une bordure périphérique (13) relevée, **caractérisée en ce que** la bordure périphérique (13) forme une arête d'étanchéité (18) de pourtour, orientée vers la tige de la chaussure, avec un canal annulaire (19) se raccordant côté fond, dans lequel débouchent des canaux de liaison (20) montant depuis le fond (16), en assurant un guidage.

3. Dispositif (1) pour la mise en oeuvre du procédé selon la revendication 1, avec un banc (4) pour insérer la coque de semelle (2) et un embauchoir (9) déplaçable selon une course par rapport au banc (4), afin d'introduire la tige de chaussure (3) dans la coque de semelle (2), **caractérisé en ce que** le banc (4) réalisé d'une seule pièce est muni, à hauteur de la zone de bordure supérieure (14) de la bordure périphérique (13), d'une coque de semelle (2) insérée, ayant un dispositif de fermeture (5) faisant le pourtour, susceptible d'être contraint radialement vers l'intérieur.

4. Dispositif selon la revendication 3, **caractérisé en ce que** le dispositif de fermeture (5) est formé d'un tuyau à pression (8) susceptible d'être sollicité par une pression, inséré dans une gorge (6) ouverte vers l'intérieur, de la délimitation latérale de banc (7).
